# EUROPEAN PATENT SPECIFICATION

(11) **EP 1 919 224 B1**
(45) Date of publication and mention of the grant of the patent: **11.04.2012**
(21) Application number: 07021505.8
(22) Date of filing: 05.11.2007
(51) Int. Cl.: H04N 5/76, G11B 27/00

(54) **Information record/reproduction apparatus**
Vorrichtung zur Aufzeichnung und Wiedergabe von Informationen
Appareil d'enregistrement/reproduction d'informations

(30) Priority: 06.11.2006 JP 2006300155
(43) Date of publication of application: 07.05.2008
(73) Proprietor: Funai Electric Co., Ltd., Daito-shi Osaka 574-0013 (JP)
(72) Inventor: Sugihara, Akinobu, Osaka 574-0013 (JP)
(74) Representative: Beetz & Partner

(56) References cited:
- EP-A2- 1 450 369
- WO-A2-2004/053842
- US-A1- 2004 091 235
- US-A1- 2006 245 722

## Description

### BACKGROUND OF THE INVENTION

### Field of the Invention

The present invention relates to an information record/reproduction apparatus which includes a record medium, and which records a television program and other information onto the record medium and reproduces the recorded information.

### Description of the Related Art

In recent years, there has come into wide use a hard disk drive (hard disk recorder) which can record and reproduce a television program received by a tuner, onto and from a hard disk. There has also come into wide use a composite type record/reproduction apparatus in which such a hard disk drive is incorporated together with an optical disk drive (DVD recorder) that records/reproduces information onto/from a DVD (digital versatile disk) or the like optical disk.

Meanwhile, the continuous dramas of television programs include a continuous drama which is broadcasted on Mondays through Fridays or on Mondays through Saturdays, and a continuous drama which is broadcasted once a week on the same days of the week. Besides, a news program or a weather forecast program is often broadcasted at the same time every day. Since the television programs such as the continuous drama, news program and weather forecast program are regularly broadcasted, they shall be called the "regular programs" here. In reserving such a regular program to be recorded in the information record/reproduction apparatus, a "broadcast time zone" and the "day of the week" or "every day" are designated without designating a date.

In addition, in a case where the regular program recorded on the hard disk by the recording reservation is to be reproduced in the information record/reproduction apparatus, a user reproduces the unviewed regular program by manipulating the reproduction list key of a remotecontroller so as to display a reproduction list screen (title list screen) on a display device, subsequently selecting the title (the program) not viewed yet, and finally performing a reproducing manipulation. Incidentally, JP-A-2006-74586 (Patent Document 1) and JP-A-2006-186663 (Patent Document 2) are mentioned as documents concerning the prior art.

The information record/reproduction apparatus in the prior art, however, has been problematic in the case of reproducing the regular program. Regarding the continuous drama, the user usually wants to first reproduce the unviewed regular program which is the oldest (that is, which has been recorded earliest). Therefore, he/she performs the manipulation of selecting the unviewed regular program of the oldest record date from within the reproduction list screen. Such a manipulation is troublesome to him/her. Besides, in a case where the user remembers if a program is the unviewed regular program, no drawback is involved, but in a case where he/she forgot the program, he/she must reproduce the program by way of trial. Also the reproducing manipulation therefor becomes troublesome.

By the way, in the prior-art technique of Patent Document 1, each time the reproduction of one program has ended, a reproduction-program selection portion is caused to search for a program which has the same program title as that of the program having been reproduced just now, the recording date and hour of which are nearest to those of the program having been reproduced just now, and the recording date and hour of which are later than those of the program having been reproduced just now. If such a program exists, it is sent to a reproduction portion, and the reproduction portion is instructed to reproduce the program. In this way, the programs of the same title can be automatically reproduced and viewed in the recorded order and in succession to the designated part of the program desired to be viewed.

With this prior-art technique, in a case where the successive programs (corresponding to the regular programs) of the continuous drama or the like are recorded and are reproduced later, they are reproduced in succession. The prior-art technique, however, cannot reproduce only the unviewed successive programs (regular programs) by the instruction of starting the reproduction (for example, one time of key manipulation).

Besides, with the prior-art technique of Patent Document 2, the total number of the recordings of successive programs (regular programs) among a plurality of programs recorded in the hard disk drive is indicated on a program selection screen, whereby the user can immediately know how many successive programs have been recorded. Besides, in the successive programs, the level of oldness among the unviewed programs is indicated on the program selection screen, whereby the user can easily grasp and select the oldest program among the unviewed successive programs. The prior-art technique, however, merely manages the oldest program among the unviewed successive programs and does not reproduce the unviewed successive programs in succession.

WO 2004/053842 discloses for episodic series to playback the next unmatched video thus promoting the viewing of programs in order.

### SUMMARY OF THE INVENTION

The present invention has for its object to provide an information record/reproduction apparatus in which the program information items of unviewed regular recording titles (of, for example, a continuous drama) can be appropriately reproduced merely by giving the instruction of a reproduction start (for example, by depressing a reproduction key).

The invention is as set out in the claims.

### DESCRIPTION OF THE DRAWINGS

The foregoing and other objects and features of the present invention will become more apparent from the following detailed description of preferred embodiments when taken in conjunction with the accompanying drawings, wherein:

Fig. 1 is a block diagram showing the configuration of a composite type record/reproduction apparatus which is an information record/reproduction apparatus according to an embodiment of the invention;

Fig. 2 is an explanatory diagram for explaining an example of title management information in the embodiment; and

Fig. 3 is a flow chart concerning a process in the case of reproducing those regular programs of a continuous drama or the like which have been regularly recorded in the embodiment.

### DESCRIPTION OF THE PREFERRED EMBODIMENTS

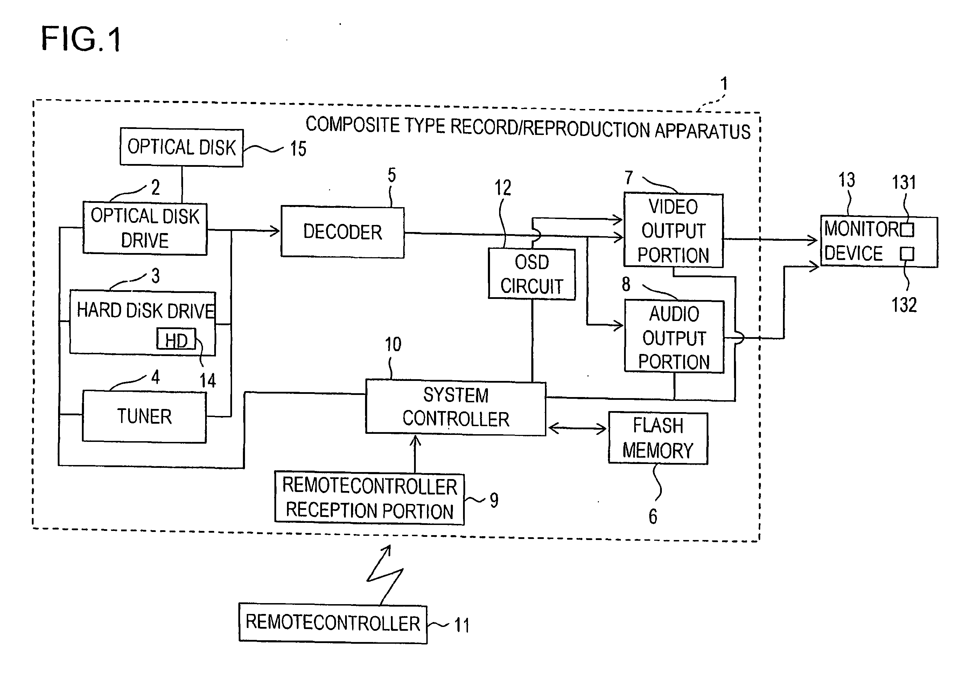

Now, the embodiments of the present invention will be described with reference to the accompanying drawings. Fig. 1 is a block diagram showing the configuration of a composite type record/reproduction apparatus which is an information record/reproduction apparatus according to one embodiment of the invention. Here, the composite type record/reproduction apparatus in which a hard disk drive and an optical disk drive are incorporated will be described as the information record/reproduction apparatus. However, the function of reproducing regular programs (of a continuous drama or the like) as is the feature of this embodiment is not restricted to the composite type record/reproduction apparatus, but similar advantages can be attained even when the reproducing function is bestowed on the simple hard disk drive or optical disk drive.

Referring to Fig. 1, the composite type record/reproduction apparatus 1 includes an optical disk drive 2 which records/reproduces information onto/from an optical disk 15 such as DVD or CD, a hard disk drive (HDD) 3 which records/reproduces information onto/from a hard disk (HD) 14, a tuner 4 which receives television broadcast signals from an antenna not shown, and which selects a television broadcast signal of desired channel and outputs the selected signal as video and audio signals, a decoder 5 which decodes the video and audio signals outputted from the optical disk drive 2, the hard disk drive 3 or the tuner 4, and a flash memory 6 in which broadcast channels receivable by the tuner 4 are stored, and in which programs necessary for the operation of a system controller 10, etc. are stored.

Besides, the composite type record/reproduction apparatus 1 includes a video output portion 7 by which the video signal decoded by the decoder 5 is converted into a video signal displayable by the display device 131 of a monitor device (such as a television receiver) 13, an OSD circuit 12 which causes the display device 131 of the monitor device 13 to display a reproduction list screen, etc., an audio output portion 8 by which the audio signal decoded by the decoder 5 is converted into an audio signal outputtable by the loudspeaker 132 of the monitor device 13, a remotecontroller reception portion 9 which receives various command signals of infrared radiation transmitted from a remotecontroller 11, which converts the received infrared command signals into command signals of electric signals, and which inputs the electric command signals to the system controller 10, and the system controller 10 which controls the whole apparatus.

As the feature of this embodiment, the system controller 10 includes regular-recording-title existence decision means for deciding whether or not any regular recording title exists, in accordance with a regular recording title flag affixed to title management information in a recording reservation, when the depression of that reproduction key of the remotecontroller 11 (which may well be the reproduction key of a body manipulation portion not shown) has been detected, and on conditions that the record medium is not under reproduction and that a resume function is not "ON".

Besides, the system controller 10 includes unviewed-regular-recording-title existence decision means for deciding whether or not any unviewed regular recording title exists, in accordance with a viewing flag in a case where the existence of the regular recording title has been decided, oldest-unviewed-regular-recording-title selection means for selecting the oldest unviewed regular recording title (recorded at the earliest time) from among the unviewed regular recording titles, on the basis of the title management information in a case where the existence of the unviewed regular recording title has been decided, and the newest title selection means for selecting the newest title (recorded at the latest time) on the basis of the title management information in a case where the nonexistence of the regular recording title has been decided or where the nonexistence of the unviewed regular recording title has been decided.

Besides, the system controller 10 includes resume-point decision means for deciding whether or not a resume point has already been affixed to the oldest unviewed regular recording title, in a case where the oldest unviewed regular recording title has been selected, reproduction-start-position setting means for setting a reproduction start position at the resume point, in case of the decision that the resume point has already been affixed, and for setting the reproduction start position at the head of the title, in case of the decision that the resume point has not been affixed, and title-reproduction start means for starting the reproduction of the title from the set reproduction start position.

Owing to the above configuration, the composite type record/reproduction apparatus 1 is capable of recording the information items (program information items) of the contents of television programs (pictures and sounds concerning the contents of the programs) over the plurality of programs, and it is capable of reproducing the recorded program information items. Incidentally, here in this specification, the program information itself of a certain title will be sometimes expressed merely as the "title".

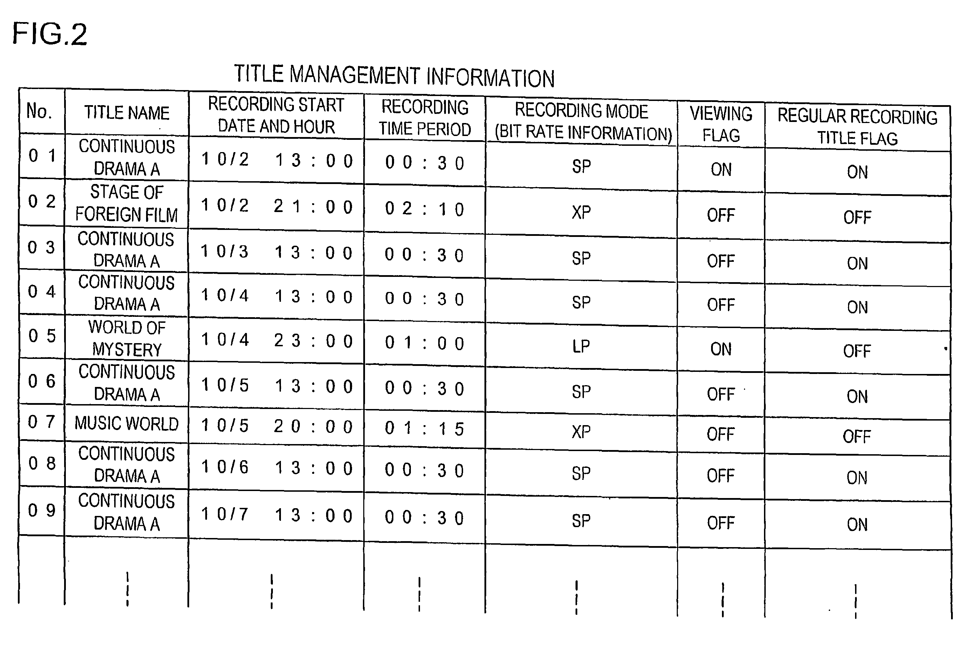

Fig. 2 is a diagram for explaining an example of the title management information in this embodiment. The title management information is formed containing a title name which indicates the name of a recorded program, a recording start date and hour on and at which the pertinent title was recorded in accordance with a recording reservation, a recording time period length which indicates the length of the recording time period of the pertinent title, a recording mode which indicates the recording picture quality (bit rate information) of the pertinent title, a viewing flag which indicates whether or not the pertinent title has been viewed, and a regular recording title flag which indicates whether or not the pertinent title is a regular recording title. Such title management information is recorded in the title management area of the HD (hard disk) 14.

In the case of this example of the title management information, regarding the "continuous drama A" of title No. 01, it is indicated that the recording start date and hour are October 2 and 1300 hours, that the recording time period length is 30 minutes, that the recording mode is "SP", that viewing flag is "ON', and that the regular recording title flag is "ON". Regarding the "stage of foreign film" of title No. 02, it is indicated that the recording start date and hour are October 2 and 2100 hours, that the recording time period length is 2 hours and 10 minutes, that the recording mode is "XP", that the viewing flag is "OFF", and that the regular recording title flag is "OFF". Regarding the "continuous drama A" of title No. 03, it is indicated that the recording start date and hour are October 3 and 1300 hours, that the recording time period length is 30 minutes, that the recording mode is "SP", that the viewing flag is "OFF", and that the regular recording title flag is "ON". Regarding the "continuous drama A" of title No. 04, it is indicated that the recording start date and hour are October 4 and 1300 hours, that the recording time period length is 30 minutes, that the recording mode is "SP", that the viewing flag is "OFF", and that the regular recording title flag is "ON'.

Regarding the "world of mystery" of title No. 05, it is indicated that the recording start date and hour are October 4 and 2300 hours, that the recording time period length is 1 hour, that the recording mode is "LP", that the viewing flag is "ON", and that the regular recording title flag is "OFF". Regarding the "continuous drama A" of title No. 06, it is indicated that the recording start date and hour are October 5 and 1300 hours, that the recording time period length is 30 minutes, that the recording mode is "SP", that the viewing flag is "OFF", and that the regular recording title flag is "ON'. Regarding the "music world" of title No. 07, it is indicated that the recording start date and hour are October 5 and 2000 hours, that the recording time period length is 1 hour and 15 minutes, that the recording mode is "XP", that the viewing flag is "OFF", and that the regular recording title flag is "OFF". Regarding the "continuous drama A" of title No. 08, it is indicated that the recording start date and hour are October 6 and 1300 hours, that the recording time period length is 30 minutes, that the recording mode is "SP", that the viewing flag is "OFF", and that the regular recording title flag is "ON". Regarding the "continuous drama A" of title No. 09, it is indicated that the recording start date and hour are October 7 and 1300 hours, that the recording time period length is 30 minutes, that the recording mode is "SP", that the viewing flag is "OFF", and that the regular recording title flag is "ON'.

In this example, the "continuous dramas A" of the title Nos. 01, 03, 04, 06, 08 and 09 correspond to the regular recording titles, and regarding the continuous drama A of the title No. 01, the viewing flag is "ON", and it is therefore indicated that this title has already been reproduced (or has already been viewed). Also, regarding the "world of mystery" of the title No. 05, the viewing flag is "ON', and it is therefore indicated that the user has already viewed this title. Whether or not the pertinent title is an unviewed title is judged in accordance with the viewing flag. This viewing flag is set at "ON" (TRUE) when the corresponding title has been reproduced for, at least, a prescribed time period (for example, five sixths of the whole pertinent title).

Incidentally, the "ON'/"OFF" of the regular recording title flag may be set in compliance with an instruction given by the user, or it may well be automatically set. Mentioned as an automatically setting technique is, for example, a technique which sets the regular recording title flag at "ON" in a case where the recording start date and hour and the recording time period length (or, further the recording mode) agree with predetermined set values, and which sets the regular recording title flag at "OFF" in any other case.

Besides, the composite type record/reproduction apparatus 1 is furnished with the function (resume function) of starting reproduction from a position where reproduction was interrupted in the execution of the last reproduction, when the instruction of starting the reproduction of information has been given (that is, when the reproduction key has been depressed by the user). Whether the resume function is validated or invalidated ("ON"/"OFF" of the resume function) can be selected at will by the user. Besides, the user can affix the resume point at will to each of the recorded titles. The resume point determines the start position (point) of reproduction in reproducing the corresponding title.

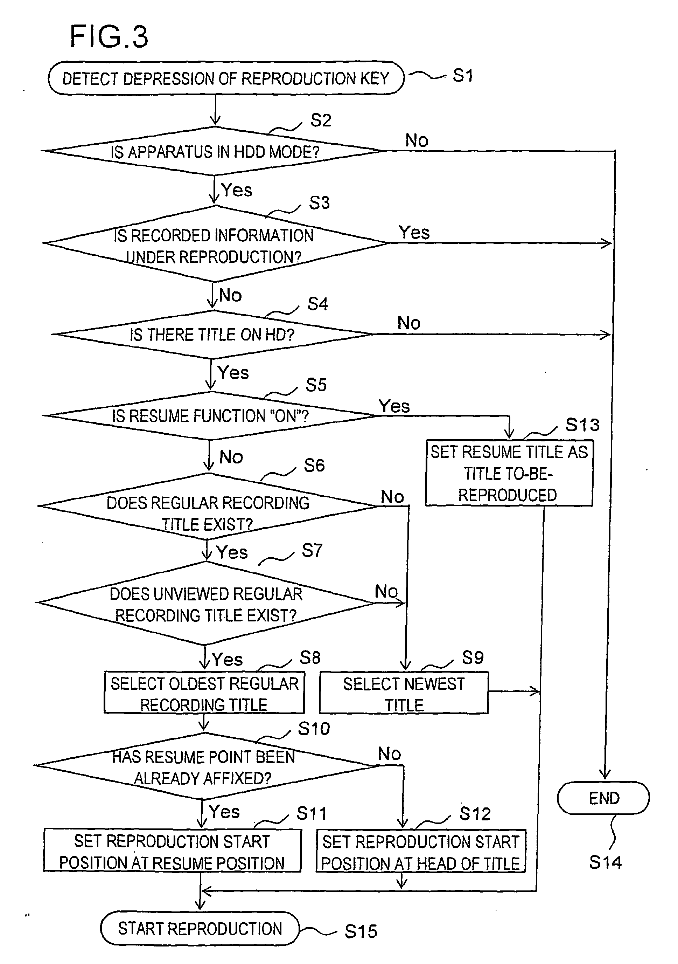

Fig. 3 is a flow chart for explaining a process in the case where those regular programs of the continuous drama or the like which have been regularly recorded are reproduced in this embodiment. The process in the case of reproducing those regular programs of the continuous drama or the like which have been regularly recorded will be described with reference to the flow chart and Figs. 1 and 2.

The composite type record/reproduction apparatus 1 is started up in such a way that the user depresses the power source key of the remotecontroller 11, thereby to turn ON the power source of the apparatus. Thereafter, when the reproduction key of the remotecontroller 11 is depressed (that is, when the instruction of the reproduction start is given), the system controller 10 detects the depression of the reproduction key (namely, the instruction of the reproduction start) (step S1), and it decides whether or not the apparatus is in an HDD mode which indicates that the hard disk drive 3 is in an operable state (step S2).

In a case where the apparatus is not in the HDD mode, this process is ended (step S14). On the other hand, in a case where the apparatus is in the HDD mode, the system controller 10 decides if the recorded information of the hard disk drive 3 is not under reproduction, that is, if any recorded program information is not already under reproduction (step S3). In case of the decision that the recorded information is under reproduction, this process is ended (step S14). On the other hand, in case of the decision that the recorded information is not under reproduction, the system controller 10 drives the hard disk drive 3, and it decides whether or not there is any title recorded on the HD (hard disk) 14 (step S4).

In case of the decision that there is not any title recorded on the HD 14, any subject for reproduction does not exist, and hence, this process is ended (step S14). On the other hand, in case of the decision that there is any title recorded on the HD 14, the system controller 10 decides whether or not the resume function stated before is ON (step S5). In case of the decision that the resume function is ON, the system controller 10 sets the resume title (the title to which the resume point is affixed) as a title to-be-reproduced (step S13), and it drives the hard disk drive 3 so as to start the reproduction of the title which was stopped with the resume point affixed, from the resume point (step S15).

In case of the decision that the resume function is not ON, the regular-recording-title existence decision means of the system controller 10 decides whether or not the regular recording title exists, in accordance with the ON or OFF status of the regular recording title flag (refer to Fig. 2) affixed to the title management information in the regular recording (step S6). In case of the decision that the regular recording title flag is OFF for any title (that is, the regular recording title does not exist), the newest-title selection means of the system controller 10 selects the newest title on the basis of the recording start date and hour (refer to Fig. 2) of the title management information (refer to Fig. 2) (step S9).

Here, as indicated in Fig. 2 by way of example, the "newest title" is the continuous drama A of the title No. 09 as is the title whose viewing flag is OFF and whose recording start date and hour are the latest. In addition, the system controller 10 drives the hard disk drive 3 and starts the reproduction of the selected newest title (step S 15).

In case of the decision of the step S6 that any regular recording title flag is ON (that is, the regular recording title exists), the unviewed-regular-recording-title existence decision means of the system controller 10 decides whether or not any unviewed regular recording title exists, in accordance with the viewing flag (refer to Fig. 2) (step S7). It is indicated that the regular recording title whose viewing flag is ON has been viewed, and that the regular recording title whose viewing flag is OFF has not been viewed yet (or is unviewed). In case of the decision that any unviewed regular recording title does not exist, the newest-title selection means of the system controller 10 selects the newest title on the basis of the title management information (step S9). In addition, the system controller 10 drives the hard disk drive 3 and starts the reproduction of the selected newest title (step S15).

On the other hand, in case of the decision that any unviewed regular recording title exists, the oldest-unviewed-regular-recording-title selection means of the system controller 10 selects the oldest title from among the unviewed regular recording titles, on the basis of the title management information (step S8). As indicated in Fig. 2 by way of example, the oldest unviewed regular recording title becomes the continuous drama A of the title No. 03 having the oldest recording start date and hour of October 3 and 1300 hours, among the continuous dramas A whose viewing flags are OFF and whose regular recording title flags are ON.

Subsequently, the resume-point decision means of the system controller 10 decides whether or not the resume point has already been affixed to the oldest unviewed regular recording title (step S10). In case of the decision that the resume point has already been affixed, the reproduction-start-position setting means of the system controller 10 sets the reproduction start position at the resume point (step S11), and in case of the decision that the resume point has not been affixed, the reproduction-start-position setting means sets the reproduction start position at the head of the title (step S12). In addition, the title-reproduction start means of the system controller 10 drives the hard disk drive 3 and starts the reproduction of the title from the set reproduction start position of the HD 14 (step S 15).

Incidentally, after the start of the reproduction (step S15), the reproduction of the second oldest unviewed regular recording title may well be automatically started subsequently when the reproduction of the oldest title has been completed. More concretely, the title whose reproduction has been completed is made "reproduced" (for example, the viewing flag is rewritten into ON), whereupon the oldest title is selected from among the unviewed regular recording titles on the basis of the title management information again and is reproduced. In this way, the unviewed regular recording titles can be reproduced successively in due course.

As described above, according to this embodiment, in a case where the recorded regular programs of a continuous drama or the like are viewed at a weekend or the like, the unviewed programs of the continuous drama or the like can be reproduced, merely by depressing a reproduction key without displaying a reproduction list screen on a display device, whereby the trouble of the surplus manipulation of a user can be saved in the case of viewing the recorded regular programs. Besides, the reproduction start position of a title can be changed in accordance with the existence or nonexistence of a resume point, and in the existence of the resume point, the pertinent title can be reproduced from an unviewed part, and an efficient viewing can be performed for the user.

## Claims

1. An information record/reproduction apparatus (1) comprising:
a record portion which is configured to receive television broadcast signals and to record content information of programs and television programs, and
a reproduction portion which reproduces the recorded television programs; wherein:
said record portion records every television program, also recording time information which indicates a time of the recording, a viewing flag which indicates whether or not the television program has been reproduced, and a regular recording title flag which indicates whether or not the television program is of a regular recording title under which a program that is broadcasted regularly is recorded on a regular basis; and
on the basis of the recording time information, the viewing flag and the regular recording title flag, said reproduction portion decides whether or not there is any unreproduced regular recording title so that:
if there is any unreproduced regular recording title, said reproduction portion executes a selection and reproduction process in which said reproduction portion selects and reproduces the television program recorded at the earliest time from among the television program items of the unreproduced regular recording titles
and, if there is no unreproduced regular recording title, said reproduction portion selects and reproduces the television program recorded at the latest time.

2. An information record/reproduction apparatus (1) as defined in Claim 1, wherein:
said reproduction portion judges whether or not a resume point is affixed to the selected program information;
if the resume point is affixed, said reproduction portion reproduces the television program information from a position indicated by the resume point; and
if the resume point is not affixed, said reproduction portion reproduces the television program from a head thereof.

3. An information record/reproduction apparatus (1) according to Claim 1 or 2 , wherein:
said reproduction portion judges whether or not any television program is already under reproduction, and whether or not a resume function is "ON', when an instruction of starting the reproduction has been given; and
said reproduction portion executes the selection and reproduction process in accordance with a result of the judgment.

4. An information record/reproduction apparatus (1) as defined in any of Claims 1 through 3, wherein:
when said reproduction portion has completed the reproduction of the selected television program by executing the selection and reproduction process, it subsequently makes the content program information "reproduced" and thereafter executes the selection and reproduction process again.

## Patentansprüche

1. Informationsaufzeichnungs-/-wiedergabevorrichtung (1) mit:
einem Aufzeichnungsbereich, der dazu konfiguriert ist, Fernsehausstrahlungssignale zu empfangen und Inhaltsinformation von Sendungen und Fernsehsendungen aufzuzeichnen; und
einem Wiedergabebereich, der die aufgezeichneten Fernsehsendungen wiedergibt; wobei:
der Aufzeichnungsbereich jede Fernsehsendung aufzeichnet, wobei er auch die Zeitinformation, die die Zeit der Aufzeichnung, eine Sichtmarkierung, welche angibt, ob die Fernsehsendung wiedergegeben worden ist oder nicht, und eine Regelmäßiger-Aufzeichnungstitel-Markierung aufzeichnet, welche angibt, ob die Fernsehsendung ein regelmäßiger Aufzeichnungstitel ist, unter dem eine Sendung, die regelmäßig ausgestrahlt wird, auf regelmäßiger Basis aufgezeichnet wird; und
der Wiedergabebereich auf der Grundlage der Aufzeichnungszeitinformation, der Sichtmarkierung und der Regelmäßiger-Aufzeichnungstitel-Markierung bestimmt, ob es irgendeinen nicht wiedergegebenen regelmäßigen Aufzeichnungstitel gibt oder nicht, so dass:
der Wiedergabebereich, wenn es irgendeinen nicht wiedergegebenen regelmäßigen Aufzeichnungstitel gibt, einen Auswahl- und Wiedergabevorgang ausführt, bei dem der Wiedergabebereich die Fernsehsendung, die zum frühesten Zeitpunkt aufgezeichnet wurde, aus den Fernsehsendungsposten der nicht wiedergegebenen regelmäßigen Aufzeichnungstitel auswählt und wiedergibt,
und der Wiedergabebereich, wenn es keinen nicht wiedergegebenen regelmäßigen Aufzeichnungstitel gibt, die Fernsehsendung, die zum jüngsten Zeitpunkt aufgezeichnet wurde, auswählt und wiedergibt.

2. Informationsaufzeichnungs-/-wiedergabevorrichtung (1) nach Anspruch 1, wobei:
der Wiedergabebereich beurteilt, ob ein Wiederaufnahmepunkt an der ausgewählten Sendungsinformation gesetzt ist oder nicht;
wenn der Wiederaufnahmepunkt gesetzt ist, der Wiedergabebereich die Fernsehsendungsinformation von einer Position wiedergibt, die durch den Wiederaufnahmepunkt angegeben ist; und
wenn der Wiederaufnahmepunkt nicht gesetzt ist, der Wiedergabebereich die Fernsehsendung von ihrem Anfang an wiedergibt.

3. Informationsaufzeichnungs-/-wiedergabevorrichtung (1) nach Anspruch 1 oder 2, wobei:
der Wiedergabebereich beurteilt, ob irgendeine Fernsehsendung bereits wiedergegeben wird oder nicht, und ob eine Wiederaufnahmefunktion "EIN" ist oder nicht, wenn eine Anweisung zum Beginn der Wiedergabe erfolgt ist; und
der Wiedergabebereich den Auswahl- und Wiedergabevorgang nach Maßgabe eines Ergebnisses der Beurteilung ausführt.

4. Informationsaufzeichnungs-/-wiedergabevorrichtung (1) nach irgendeinem der Ansprüche 1 bis 3, wobei:
wenn der Wiedergabebereich die Wiedergabe der ausgewählten Fernsehsendung durch Ausführen des Auswahl- und Wiedergabevorgangs abgeschlossen hat, er die Inhaltssendungsinformation als "wiedergegeben" markiert und danach den Auswahl- und Wiedergabevorgang erneut ausführt.

## Revendications

1. Dispositif d'enregistrement/reproduction d'informations (1) comprenant :
une partie d'enregistrement qui est configurée pour recevoir des signaux d'émission de télévision et pour enregistrer des informations de contenu de programmes et de programmes télévisés ; et
une partie de reproduction qui reproduit les programmes télévisés enregistrés ;
dans lequel :
ladite partie d'enregistrement enregistre chaque programme télévisé, ainsi que des informations sur l'heure d'enregistrement qui indiquent l'heure de l'enregistrement, un indicateur de visualisation qui indique si le programme télévisé a été reproduit ou non, et un indicateur de titre d'enregistrement régulier qui indique si le programme télévisé correspond ou non à un titre d'enregistrement régulier sous lequel un programme diffusé régulièrement est enregistré sur une base régulière ; et
sur la base des informations sur l'heure d'enregistrement, de l'indicateur de visualisation et de l'indicateur de titre d'enregistrement régulier, ladite partie de reproduction décide s'il y a des titres d'enregistrement régulier non reproduits de sorte que :
s'il y a des titres d'enregistrement régulier non reproduits, ladite partie de reproduction exécute un processus de sélection et de reproduction dans lequel ladite partie de reproduction sélectionne et reproduit le programme télévisé enregistré en premier parmi les programmes des titres d'enregistrement régulier non reproduits,
et s'il n'y a pas de titres d'enregistrement régulier non reproduits, ladite partie de reproduction sélectionne et reproduit le programme télévisé enregistré en dernier.

2. Dispositif d'enregistrement/reproduction d'informations (1) tel que défini dans la revendication 1, dans lequel :
ladite partie de reproduction estime si un point de reprise est joint ou non aux informations du programme sélectionné ;
si le point de reprise est joint, ladite partie de reproduction reproduit les informations du programme télévisé à partir d'une position indiquée par le point de reprise ; et
si le point de reprise n'est pas joint, ladite partie de reproduction reproduit le programme télévisé à partir du début de celui-ci.

3. Dispositif d'enregistrement/reproduction d'informations (1) selon la revendication 1 ou 2, dans lequel :
ladite partie de reproduction estime si un programme télévisé est déjà en cours de reproduction ou non et si une fonction de reprise est " ACTIVÉE " ou non, quand une instruction de démarrage de la reproduction a été donnée ; et
ladite partie de reproduction exécute le processus de sélection et de reproduction selon un résultat de l'estimation.

4. Dispositif d'enregistrement/reproduction d'informations (1) tel que défini dans l'une quelconque des revendications 1 à 3, dans lequel :
quand ladite partie de reproduction a terminé la reproduction du programme télévisé sélectionné en exécutant le processus de sélection et de reproduction, elle fait en sorte que les informations de contenu du programme deviennent des informations " reproduites " et ensuite elle exécute à nouveau le processus de sélection et de reproduction.
